# EUROPEAN PATENT APPLICATION

(11) **EP 3 553 857 A1**
(43) Date of publication of application: **16.10.2019**
(21) Application number: 16923202.2
(22) Date of filing: 06.12.2016
(51) Int. Cl.: H01M 4/66, H01M 4/74, H01M 4/13, H01M 10/0525

(54) **PAPER CURRENT COLLECTOR, METHOD FOR MANUFACTURING SAME, AND ELECTROCHEMICAL DEVICE COMPRISING PAPER CURRENT COLLECTOR**

(71) Applicant: National Institute of Forest Science, Seoul 02455 (KR)
(72) Inventor: LEE, Sun Young, Seoul 03303 (KR); LEE, Sang Young, Busan 48076 (KR); KIM, Jung Hwan, Ulju-gun Ulsan 44919 (KR); CHUN, Sang Jin, Namyangju-si Gyeonggi-do 12144 (KR); PARK, Sang Bum, Seoul 04711 (KR); CHOI, Don Ha, Seoul 06090 (KR)
(74) Representative: Eisenführ Speiser
(86) International application number: PCT/KR2016/014242
(87) International publication number: WO 2018/105767

(57) **Abstract**

The present invention relates to a paper current collector, a method of manufacturing the same, and an electrochemical device including the same. Since a paper current collector according to the present invention includes a conductive layer which includes a conductive material forming a conductive network with nanocellulose fiber on a fiber layer including the nanocellulose fiber, there are advantages in that a weight is low, an energy density of an electrode is high when the electrode is manufactured, mechanical flexibility is superior, and electrical properties and transparency of a material may also be secured.

## Description

### [Technical Field]

The present invention relates to a paper current collector, a method of manufacturing the same, and an electrochemical device including the same.

### [Background Art]

Recently, with increases in importance of flexible electrochemical devices, such as flexible lithium-ion batteries, for various designs of roll-up displays, wearable electronic devices, and the like and requirements for design diversity, there is a growing interest in flexible materials forming the flexible electrochemical devices.

For example, a lithium-ion secondary battery, which is manufactured by sequentially stacking a positive electrode, a separation membrane, and a negative electrode in a case and injecting an electrolyte therein, is disclosed in Korean Laid-Open Patent Publication No. 2015-0131505. However, since the battery having such a structure is lacking in physical flexibility, there are many limitations to meeting design diversity required for the flexible electrochemical devices. Particularly, an electrode, such as a positive electrode or a negative electrode, among components of the lithium-ion secondary battery is manufactured by coating a metal-based current collector with an electrode mixture in which an electrode active material is dispersed in a conductive material, a binder, and a solvent which have particle forms. However, since the metal-based current collector is expensive and heavy, an energy density of a battery is decreased, mechanical flexibility is low, an electrode active layer of which a surface is coated with an electrode mixture is also easily detached, and thus the metal-based current collector has a limitation of having a short lifespan.

In addition, in order to secure design diversity of a material, studies on transparent materials which may be directly integrated with next-generation solar cells, displays, or the like and which are relatively free from design limitations are actively being carried out. However, since transparency and electrical properties such as electrical conductivity of a material conflict with each other, it is very difficult to develop a material which meets all requirements for the electrical properties and the transparency.

Accordingly, the development of a current collector is urgently required, in which material costs are low and economical, a weight is light, an energy density of an electrode is high when the electrode is manufactured, mechanical flexibility is high, and electrical properties and transparency of the current collector may also be easily controlled.

### [Disclosure]

### [Technical Problem]

The present invention is directed to providing a current collector of which a weight is low, an energy density of an electrode is high when the electrode is manufactured, mechanical flexibility is superior, and all electrical properties and transparency of a material may also be secured.

### [Technical Solution]

One aspect of the present invention provides a paper current collector including a fiber layer including nanocellulose fiber and a conductive layer formed in the fiber layer and including one or more conductive materials, wherein the conductive material ranges from 5 to 1,000 parts by weight based on 100 parts by weight of the nanocellulose fiber.

Another aspect of the present invention provides a method of manufacturing the paper current collector.

Still another aspect of the present invention provides an electrode including the paper current collector and an electrochemical device including the electrode.

### [Advantageous Effects]

Since a paper current collector according to the present invention includes a conductive layer which includes a conductive material forming a conductive network with nanocellulose fiber on a fiber layer including the nanocellulose fiber, there are advantages in that a weight is low, an energy density of an electrode is high when the electrode is manufactured, mechanical flexibility is superior, and electrical properties and transparency of a material may also be secured.

### [Description of Drawings]

FIG. 1 is an image showing a sequential electrospinning used in the present invention.
FIG. 2 is a schematic image showing a dual electrospinning used in the present invention.
FIG. 3 is an image in which surfaces of current collectors manufactured according to the present invention are analyzed using a scanning electron microscope (SEM, acceleration voltage: 15 kV).
FIG. 4 is an image in which insulation resistances of current collectors of Example 2 and Comparative Example 2 according to the present invention are measured.
FIG. 5 shows graphs showing a surface resistance and an electrical conductivity of the current collector manufactured according to the present invention.
FIG. 6 is a graph showing a transmittance of the current collector manufactured according to the present invention for light with a wavelength of 550 nm.
FIG. 7 is a graph showing a resistance value of the current collector according to a bending diameter thereof which is manufactured in Example 2.
FIG. 8 is a graph showing a change rate of an initial resistance value of the current collector manufactured in Example 2 when a bending test is repeatedly performed on the current collector 5,000 times at intervals of 5 mm.
FIG. 9 shows a SEM (acceleration voltage: 15 kV) image and an energy dispersive X-ray spectroscopy (EDX) image of the current collector manufactured in Example 2 after the bending test is repeatedly performed on the current collector 5,000 times at intervals of 5 mm.
FIG. 10 is a graph showing an initial discharge capacity of a battery including the current collector manufactured according to the present invention.

### [Best Mode]

Since the invention allows for various changes and numerous embodiments, specific embodiments will be illustrated in the drawings and described in detail in the written description.

However, this is not intended to limit the present invention to specific modes of practice, and it is to be appreciated that all changes, equivalents, and substitutes that do not depart from the spirit and technical scope of the present invention are encompassed in the present invention.

It will be further understood that the terms "comprise," "comprising," "include," and/or "including," in the present invention, specify the presence of stated features, numbers, steps, operations, elements, components, and/or groups thereof, but do not preclude the presence or addition of one or more other features, numbers, steps, operations, elements, components, and/or groups thereof.

In addition, it will be understood that the accompanying drawings are enlarged or reduced in size for the sake of convenience in the description.

The present invention relates to a paper current collector, a method of manufacturing the same, and an electrochemical device including the same.

Recently, with increases in importance of flexible electrochemical devices such as flexible lithium-ion batteries for various designs of roll-up displays, wearable electronic devices, and the like and requirements for design diversity, there is a growing interest in flexible materials forming the flexible electrochemical devices.

For example, a lithium-ion secondary battery is manufactured by sequentially stacking a positive electrode, a separation membrane, and a negative electrode in a standard case and injecting an electrolyte therein. However, since the battery having such as structure is lacking in physical flexibility, there are many limitations to meeting design diversity required for the flexible electrochemical devices. Particularly, an electrode, such as a positive electrode or a negative electrode, among components of the lithium-ion secondary battery is manufactured by coating a metal-based current collector with an electrode mixture in which an electrode active material is dispersed in a conductive material, a binder, and a solvent which have particle forms. However, since the metal-based current collector is expensive and heavy, an energy density of a battery is decreased, mechanical flexibility is low, an electrode active layer of which a surface is coated with an electrode mixture is also easily detached, and thus the metal-based current collector has a limitation of having a short lifespan.

In addition, in order to secure design diversity of a material, studies on transparent materials which may be directly integrated with next-generation solar cells, displays, or the like and which are relatively free from design limitations are actively being carried out. However, since transparency and electrical properties such as electrical conductivity of a material conflict each other, it is very difficult to develop a material which meets all requirements for the electrical properties and the transparency.

Therefore, the present invention provides a paper current collector, a method of manufacturing the same, and an electrochemical device including the same.

Since the paper current collector according to the present invention includes a conductive layer having a conductive material forming a conductive network with nanocellulose fiber on a fiber layer having the nanocellulose fiber, there are advantages in that a weight is low, an energy density of an electrode is high when the electrode is manufactured, mechanical flexibility is superior, and all electrical properties and transparency of a material may also be secured.

Hereinafter, the present invention will be described in more detail.

In one embodiment of the present invention, a paper current collector including nanocellulose fiber and a conductive material is provided.

The paper current collector according to the present invention may have a structure in which a conductive layer including one or more conductive materials forms a conductive network with nanocellulose fiber on a fiber layer including the nanocellulose fiber.

As an example, the paper current collector may have a structure which includes: a fiber layer including nanocellulose fiber; and a conductive layer formed on the fiber layer and including one or more conductive materials.

As another example, the paper current collector may have a structure which includes: a fiber layer including nanocellulose fiber; a first conductive layer formed on the fiber layer and including a first conductive material; and a second conductive layer including a second conductive material.

Since the paper current collector according to the present invention has the structure which includes the fiber layer including the nanocellulose fiber as a base material and the conductive layer including the conductive material forming the network structure with the nanocellulose fiber of the fiber layer on a surface of the fiber layer, when compared with a metal current collector conventionally used for a general electrochemical device, a weight is low, mechanical flexibility is superior, an energy density of an electrode is high when the electrode is manufactured, and electrical properties such as an electrical conductivity and transparency are also superior.

Here, the fiber layer may have a structure in which nanocellulose, which has a fiber form, is lightweight, has high flexibility, and is tangled to form voids, and the nanocellulose fiber included in the fiber layer may be one or more selected from the group consisting of a cellulose nanofiber separated from a nanoscale wood material, a seaweed nanofiber, bacteria cellulose obtained by culturing bacteria, a derivative thereof, and a mixture thereof. As an example, the nanocellulose fiber layer may be paper including vegetable cellulose fiber. In the case of the paper, the paper may be prepared by treating the nanocellulose fiber with alkali, mixing the nanocellulose fiber with a binder, making paper with the fiber mixed with the binder, and drying the paper.

In addition, an average diameter of the nanocellulose fiber may range from 10 nm to 1,000 nm, and an average length thereof may range from 10 nm to 100,000 nm. More specifically, the average diameter of the nanocellulose fiber may range from 50 nm to 500 nm or 50 nm to 200 nm, and the average length thereof may range from 10 nm to 10,000 nm or 50 nm to 1,000 nm. Since the present invention controls ranges of the average diameter and the average length of the cellulose fiber to be within the above-described ranges, a fiber shape is easily formed, and a surface of the prepared network structure is uniform so that interface properties may be improved.

In addition, the nanocellulose fiber may be reformed by one or more functional groups selected from the group consisting of a hydroxyl group, a carboxyl group, an acetyl group, a silane group, and an acryl group. As an example, the nanocellulose fiber may include nanocellulose fiber in which a vegetable cellulose nanofiber is oxidized using 2,2,6,6-tetramethylpiperidine-1-oxyl (TEMPO) and a carboxyl group is introduced thereinto.

In addition, the conductive layer may have the network structure in which the conductive materials having fiber forms are tangled to form a conductive network. Here, the conductive material may have the fiber form with an average diameter ranging from of 10 nm to 100 µm, and an average of a ratio L/D of the average length to the average diameter may be 50 or more. Specifically, the average diameter of the conductive material may range from 10 nm to 10 µm, from 10 nm to 1 µm, from 50 nm to 500 µm, from 500 nm to 1 µm, from 1 µm to 10 µm, from 1 µm to 100 µm, or from 1 µm to 50 µm, the ratio L/D of the average length to the average diameter may be 50 or more, or 100 or more, or range from 50 to 10,000, from 50 to 5,000, from 50 to 1,000 or from 50 to 500. Since the present invention controls the average diameter and the ratio L/D of the average length to the average diameter of the conductive material having the fiber form to be within the above-described ranges, a form in which a length of a major axis is greater than that of a minor axis is maintained, it is advantageous to be combined with the nanocellulose fiber, a contact resistance between the conductive materials may be reduced to effectively form the conductive network, and mechanical flexibility of the conductive layer may also be improved. Since miscibility is low between a support conventionally used for a current collector to secure mechanical properties and a conductive material used for securing electrical conductivity, there is a problem in that a sufficient electrical conductivity is not realized. To solve this problem, a surfactant which facilitates a conductive material to be dispersed is necessarily added. However, since most of the added surfactant has nonconductive properties, electrical conductivity is decreased. However, since a current collector of the present invention easily combines the nanocellulose fiber included in the fiber layer and the conductive material included in the conductive layer without an additive, the conductive network structure may be easily realized.

In addition, in a case in which the conductive layer includes two or more conductive materials, the conductive layer may include the conductive materials formed in a form in which the conductive materials are stacked on each other as individual layers. Specifically, the conductive layer may have a structure having the first conductive layer including the first conductive material and the second conductive layer including the second conductive material.

In addition, any conductive material which is generally used for an electrochemical device may be used as the conductive material included in the conductive layer without limitation. Specifically, the conductive material may include: two or three selected from the group consisting of one or more carbon-based materials among carbon fiber, graphene, carbon nanotubes, carbon nanofiber, and carbon ribbons; one or more metals among copper, silver, nickel, and aluminum; and one or more conductive polymers among polyphenylene and polyphenylene derivatives. In addition, the conductive material included in the first conductive layer may be different from the conductive material included in the second conductive layer. As an example, in a case in which the conductive layer includes the first conductive layer and the second conductive layer, one layer of the first and second conductive layers may include a carbon-based conductive material and the other layer may include a metal conductive material. More specifically, the first conductive layer of the conductive layer may include Ag, and the second conductive layer may include carbon nanotubes.

In addition, a content ratio of the conductive layer of the present invention may range from 5 to 1,000 parts by weight based on 100 parts by weight of the nanocellulose fiber layer. Specifically, the content ratio may range from 5 to 700 parts by weight, from 5 to 500 parts by weight, from 5 to 200 parts by weight, from 5 to 100 parts by weight, from 5 to 50 parts by weight, from 5 to 30 parts by weight, from 5 to 25 parts by weight, from 5 to 20 parts by weight, from 5 to 15 parts by weight, from 5 to 10 parts by weight, from 10 to 30 parts by weight, from 15 to 25 parts by weight, from 8 to 12 parts by weight, from 18 to 22 parts by weight, from 50 to 1,000 parts by weight, from 10 to 800 parts by weight, from 50 to 800 parts by weight, from 50 to 600 parts by weight, from 50 to 500 parts by weight, from 50 to 300 parts by weight, from 50 to 200 parts by weight, from 50 to 100 parts by weight, from 100 to 300 parts by weight, from 200 to 500 parts by weight, from 400 to 700 parts by weight, from 500 to 900 parts by weight, from 700 to 1,000 parts by weight, from 100 to 300 parts by weight, from 150 to 250 parts by weight, or from 180 to 220 parts by weight based on 100 parts by weight of the nanocellulose fiber layer. Since the present invention controls the content ratio of the fiber layer including the nanocellulose fiber and the conductive layer as described above, electrical conductivity and mechanical flexibility of the current collector may be improved while a weight of the current collector is decreased.

Meanwhile, the paper current collector according to the present invention may have a superior transmittance, and the transmittance may be 50% or more for light with a wavelength of 550 nm. Specifically, the light transmittance may range from 50% to 99%, from 60% to 99%, from 70% to 99%, from 70% to 90%, from 70% to 80%, from 70% to 75%, from 73% to 75%, from 80% to 99%, from 90% to 99%, from 95% to 99%, or from 96% to 98%.

In addition, since the paper current collector has superior mechanical flexibility, the conductive layer is not detached or damaged even after being wound around a rod having a diameter of 5 mm or repeatedly performing a bending test on the paper current collector 5,000 times, and thus a change rate of an initial surface resistance value may be 5% or less. Specifically, the change ratio may be 3% or less, 2% or less, 1% or less, or may range from 0.01 to 2%.

In addition, one embodiment of the present invention provides a method of manufacturing the paper current collector including electrically spinning a spinning solution including the conductive material on the fiber layer including the nanocellulose fiber.

The method of manufacturing the paper current collector according to the present invention has advantages in that the conductive material forming the conductive layer may be uniformly dispersed on the fiber layer by using electro spinning when the conductive layer is introduced onto the fiber layer including the nanocellulose fiber and may also effectively form the conductive network with the nanocellulose fiber of the fiber layer, and in a case in which two or more conductive materials form conductive layers, the conductive network may be easily formed between the conductive materials included in the conductive layers.

Here, the electrospinning may be a sequential electrospinning or a dual electro spinning.

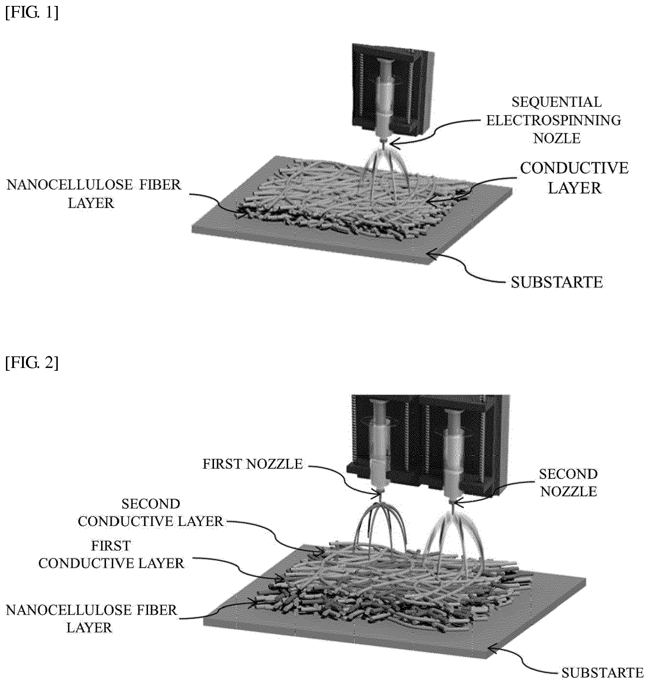

The sequential electrospinning refers to a method in which a spinning solution including both of the first conductive material and the second conductive material is electrically spun on the fiber layer including the nanocellose fiber using one nozzle to disperse and mix the first conductive material and the second conductive material on the surface of the fiber layer as illustrated in FIG. 1. In addition, the dual electrospinning refers to a method in which, when the conductive layer is formed on the fiber layer including the nanocellulose fiber, a first nozzle and a second nozzle included in an electrospinning apparatus sequentially spin the first conductive material forming the sequentially first conductive layer and the second conductive material forming the second conductive layer so that the conductive materials are sequentially stacked on the fiber layer in the fiber forms as illustrated in FIG. 2.

Here, an electrospinning speed at which the conductive material is spun may range from 0.1 ml/h to 100 ml/h. Specifically, the speed may range from 0.1 ml/h to 5 ml/h, from 1 ml/h to 10 ml/h, from 5 ml/h to 50 ml/h, from 10 ml/h to 40 ml/h, from 15 ml/h to 30 ml/h, or from 18 ml/h to 22 ml/h.

In addition, the electrospinning may be performed under a voltage condition ranging from 5 kV to 50 kV. Specifically, the electrospinning may be performed under the voltage condition ranging from 5 kV to 20 kV, from 20 kV to 50 kV, from 10 kV to 30 kV, from 30 kV to 50 kV, from 15 kV to 25 kV, from 15 kV to 21 kV, from 16 kV to 20 kV, from 15 kV to 17 kV, from 17 kV to 19 kV, or from 19 kV to 21 kV.

In addition, when the electrospinning is performed, an amount of spinning solution used may range from 0.01 ml to 10 ml per unit area (1 cm²). Specifically, the amount of spinning solution used may range from 0.01 ml to 5 ml, from 0.1 ml to 2 ml, from 0.1 ml to 1 ml, from 1 ml to 5 ml, from 5 ml to 10 ml, from 3 ml to 7 ml, from 0.2 ml to 0.8 ml, from 0.4 ml to 0.6 ml, or from 0.5 ml to 1.5 ml per unit area (1 cm²).

Since the present invention controls the electrospinning speed, the voltage condition, and the amount of spinning solution used to be within the above-described ranges during the electrospinning, contents of the conductive materials included in the conductive layer, forms of the conductive materials, porosity of the conductive layer, and the like are easily controlled, and thus electrical properties and transparency of the current collector to be manufactured may be easily controlled.

In addition, one embodiment of the present invention provides an electrode including the paper current collector and an electrode active material and the electrochemical device manufactured to include the same.

Since an electrode according to the present invention includes the above-described paper current collector and has superior mechanical flexibility and electrical conductivity, an energy density is high, elimination of the electrode active material layer formed on the current collector is suppressed, and thus the electrode may be usefully used for a flexible electrochemical device such as a flexible lithium-ion secondary battery.

### [Modes of the Invention]

Hereinafter, the present invention will be described in more detail with reference to Example and Experimental Example.

However, following Example and Experimental Example are only examples of the present invention, and the present invention is not limited by Example and Experimental Example.

### Preparing Example 1.

A dispersion solution was prepared, in which nanocellulose fiber having a diameter ranging from 10 to 100 nm was dispersed, by agitating a suspension having a cellulose concentration of 0.5% obtained by adding cellulose fiber to water for 20 minutes using an agitator and passing the suspension through a nozzle, which has a diameter ranging from 50 to 200 µm, 20 times using a homogenizer at a pressure of 20,000 psi.

### Example 1.

A nanocellulose paper was manufactured by disposing the dispersion solution prepared in the Preparing Example 1 at sequential electrospinning nozzles of an electrospinning apparatus to perform an electro spinning. Here, an input voltage was controlled to be 20±1 kV, a spinning solution of 1 ml was spun per unit area (1 cm²) at a spinning speed of 20 ml/hr. Then, an isopropyl alcohol solution in which Ag nanowires at 1 wt% were dispersed at the sequential electrospinning nozzles and an electrospinning was performed on the manufactured nanocellulose paper to manufacture a paper current collector. Here, an input voltage was controlled to be 15±1 kV, and the spinning solution of 0.5 ml was spun per unit area (1 cm²) at a spinning speed of 20 ml/hr, and a content of an Ag nanowire layer included in the paper current collector was 10±5 parts by weight based on 100 parts by weight of the nanocellulose paper.

### Example 2.

A nanocellulose paper was manufactured through the same method as Example 1 using the dispersion solution prepared in Preparing Example 1. Then, the isopropyl alcohol solution in which Ag nanowires at 1 wt% were dispersed was injected into a first nozzle of a double electrospinning apparatus, and an aqueous solution in which nonocarbon tubes at 0.01 wt% were dispersed is injected into a second nozzle, a double electrospinning was performed on the previously manufactured nanocellulose paper to manufacture a paper current collector in which a first conductive layer including a first conductive material and a second conductive layer including a second conductive material are sequentially stacked. Here, input voltages to the first and second nozzles were respectively controlled to be 15±1 kV and 18±1 kV, spinning speeds thereof were 20±1 ml/hr and 10±1 ml/hr, each amount of spinning was controlled to be 0.5 ml per unit area (1 cm²). In addition, a content of each of the first and the second conductive layers included in the paper current collector was controlled to be 20±10 parts by weight based on 100 parts by weight of the nanocellulose paper.

### Comparative Example 1.

A dispersion solution in which nanocellulose fiber having a diameter ranging from 10 to 100 nm was prepared by agitating a cellulose suspension at 0.5 wt% obtained by adding cellulose fiber to distilled water for 20 minutes using an agitator and passing the dispersion solution through a nozzle having a diameter ranging from 50 to 200 µm 20 times using a homogenizer at a pressure of 20,000 psi. Then, an isopropyl alcohol solution in which Ag nanowires at 1 wt% were dispersed was mixed with the dispersion solution, a solvent of the mixed solution obtained as described above was volatilized to manufacture a current collector including nanocellulose fiber and a conductive material. Here, a content of an Ag nanowire layer included in the current collector was controlled to be 20±10 parts by weight based on 100 parts by weight of the nanocellulose.

### Experimental Example 1. Performance Evaluation of Paper Current Collector

The following experiments were performed to evaluate performance of the paper current collector according to the present invention.

### A. Morphology Analysis

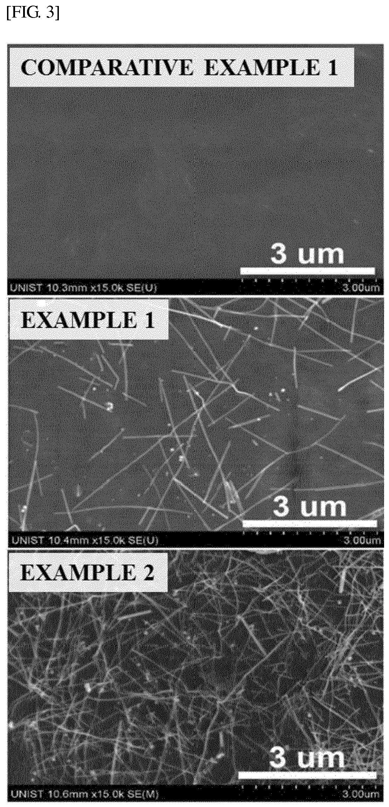

A scanning electron microscope (SEM) analysis was performed on the current collectors manufactured in Examples 1 and 2 and Comparative Example 1. Here, an acceleration voltage was 15 kV, and measured results were shown in FIG. 3.

As shown in FIG. 3, in the current collectors of Examples 1 and 2 according to the present invention, it can be seen that the conductive materials having the fiber forms are uniformly dispersed on the fiber layer including the nanocellulose fiber, and the dispersed conductive material forms a network having a network structure. However, in the current collector of Comparative Example 1, it can be seen that it is difficult to determine a conductive material on a surface thereof.

From the result, it can be seen that the conductive network of the conductive material is formed on the surface of the paper current collector according to the present invention.

### B. Electrical Conductivity Analysis

An insulation resistance of each of the paper current collectors (a length of 3 cm and a width of 2 cm) manufactured in Examples 1 and 2 and Comparative Example 1 were measured using an insulation resistance meter.

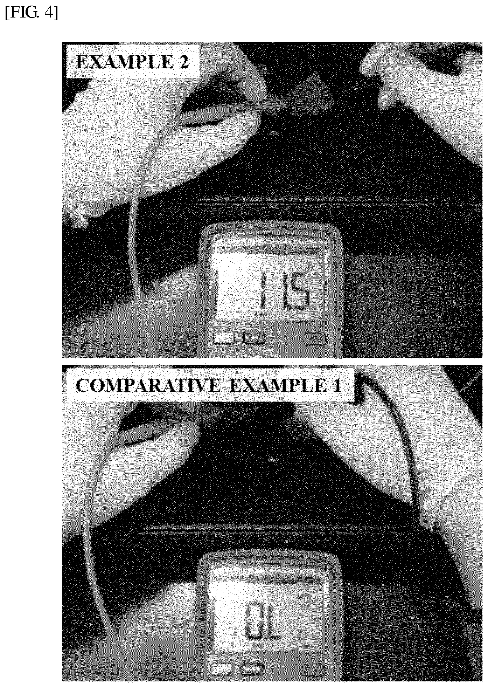

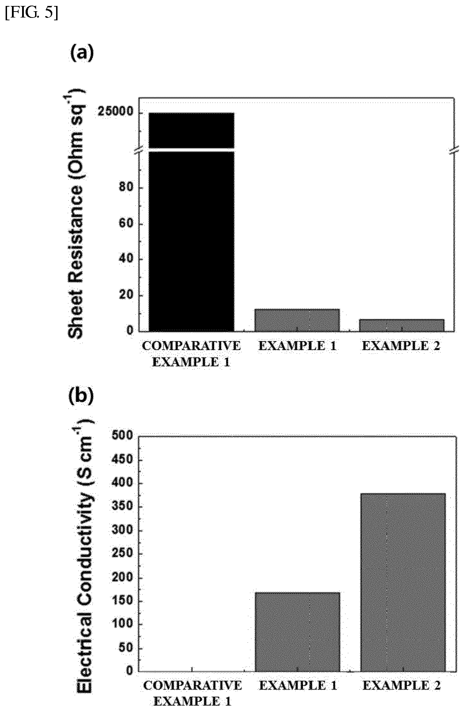

In addition, a sheet resistance and an electrical conductivity of each of the paper current collectors were measured using a four point probe, and the results were shown in FIGS. 4 and 5.

Referring to FIGS. 4 and 5, it was seen that the current collector of Example 2 according to the present invention had superior electrical properties having an insulation resistance of 11.5±0.1 mΩ. In addition, it was seen that the paper current collectors of Examples 1 and 2 respectively had surface resistances of 12.5±0.5 Ohm/sq and 3±0.5 Ohm/sq and electrical conductivities of 163±5 S/cm and 375±5 S/cm. However, it was seen that the current collector of Comparative Example 1 had an insulation resistance of 0 mΩ like a non-insulator, and it was seen that a surface resistance and an electrical conductivity are respectively 25,000 Ohm/sq and ≒0 S/cm.

From the results, it can be seen that, since the conductive network of the conductive material is formed on the surface of the paper current collector according to the present invention, electrical properties such as a sheet resistance and an electrical conductivity thereof are superior.

### C. Light Transmittance Analysis

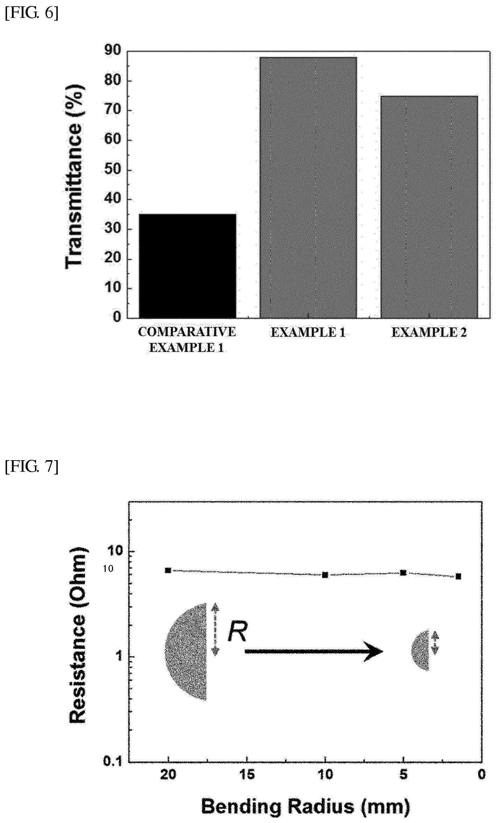

A transmittance of each of the paper current collectors (a length of 3 cm and a width of 2 cm) manufactured in Examples 1 and 2 and Comparative Example 1 was measured for light with a wavelength of 550 nm using an ultraviolet (UV)-visible (Vis) spectrophotometer, and results were shown in FIG. 6.

Referring to FIG. 6, it was seen that the current collectors of Examples 1 and 2 according to the present invention respectively had light transmittances of 97±1% and 74±1% for light with a wavelength of 550 nm. However, it was seen that the current collector of Comparative Example 1 had a light transmittance of 35±1%.

This means that, since the current collector according to the present invention includes a conductive layer having the conductive material forming the conductive network with the nanocellulose fiber on the fiber layer including the nanocellulose fiber, electrical properties and optical properties thereof are improved.

### D. Mechanical Flexibility Analysis

In order to determine mechanical flexibility of the current collector according to the present invention, first, an initial resistance of the current collector manufactured in Example 2 was measured, a resistance of the current collector was measured after the current collector was wound around an acrylic rod having a diameter ranging from 0 to 20 mm, and a change in resistance value was observed.

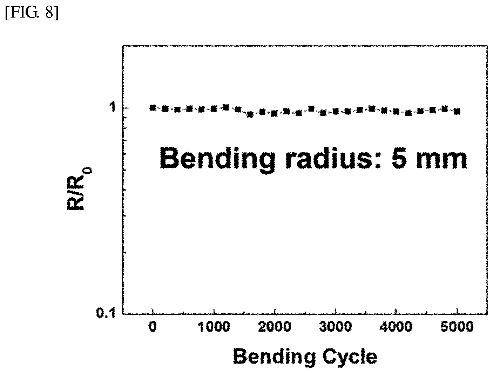

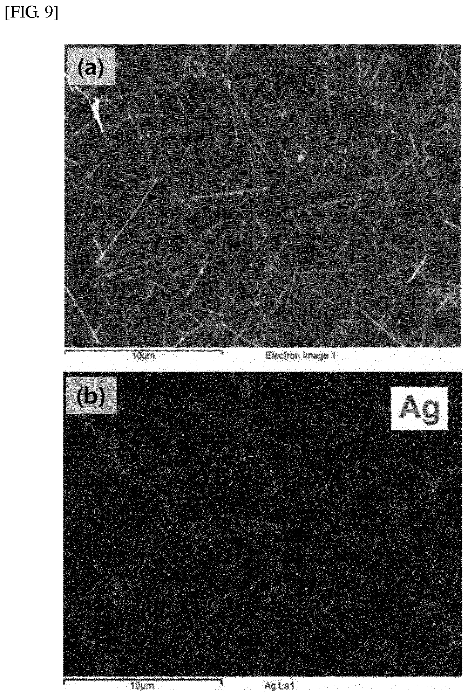

In addition, the initial resistance of the current collector manufactured in Example 2 was measured, and a resistance thereof was measured and a change in resistance value was observed while a bending test is repeatedly performed on the current collector 5,000 times at intervals of 5 mm. In addition, a morphology of the current collector was analyzed using an SEM (acceleration voltage: 15 kV), and the Ag nanowire included in the first conductive layer was analyzed using an energy dispersive X-ray spectroscopy (EDX) after the bending test is repeatedly performed on the current collector 5,000 times. Results are shown in FIGS. 7 to 9.

Referring to FIGS. 7 to 9, it was seen that, since the current collector according to the present invention had superior mechanical flexibility, an initial resistance value was not changed according to an extent of bending, the initial resistance value was constantly maintained even after being bent 5,000 times, and detaching of or damage to the conductive layer did not occur.

This result shows that, since the paper current collector according to the present invention is manufactured using an electrospinning process, the conductive network is effectively formed of the nanocellulose fiber of the fiber layer and the conductive material of the conductive layer.

### Experimental Example 2. Electrode and Battery Performance Evaluation

In order to evaluate performance of an electrode including the paper current collector and performance of a battery including the electrode according to the present invention, a coin-type lithium secondary battery including the electrode was manufactured.

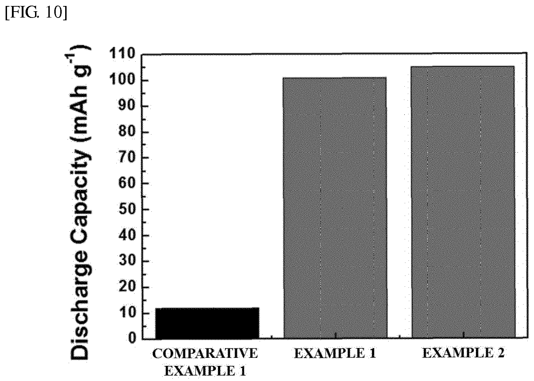

Specifically, a lithium manganese composite oxide (LiMn₂O₄, 95 wt%) which is a positive electrode active material, a carbon black (2 wt%) which is a conductive agent, and polyvinylidene fluoride (PVDF, 3 wt%) which is a binder were added to and mixed with N-methyl-2 pyrrolidone (NMP) to prepare slurry to manufacture a positive electrode. Similarly, lithium titanium oxide (Li₄Ti₅O₁₂, 88 wt%) which is a negative electrode active material, polyvinylidene fluoride (PVDF, 10 wt%) which is a binder, and a carbon black (2 wt%) which is a conductive agent were added to and mixed with N-methyl-2 pyrrolidone (NMP) to prepare slurry for manufacturing a negative electrode. The current collectors prepared in Examples 1 and 2 and Comparative Example 1 were coated with the slurry prepared as described above and dried to manufacture a positive electrode and a negative electrode. A non-aqueous electrolyte is prepared by dissolving an organic solvent (ethylene carbonate (EC):diethyl carbonate (DEC)=1:1 (v:v)) such that an organic solvent concentration is 1 M, the positive electrode and the negative electrode, which are previously manufactured, and a separation membrane (Celgard3501, thickness is 25 µm), which is commercially procured, are put in a case to form a coin-type cell, and the non-aqueous electrolyte is injected into the case to manufacture a coin-type lithium secondary battery. An initial capacity of the manufactured lithium secondary battery was measured, and results were shown in FIG. 10.

As shown in FIG. 10, it was seen that the batteries including the current collectors of Examples 1 and 2 according to the present invention respectively had initial capacities of about 100±1 mAh/g and 104±1 mAh/g, but it was seen that the battery including the current collector of Comparative Example 2 had an initial capacity of about 12±1 mAh/g.

This means that the battery including the paper current collector according to the present invention has superior electrical properties.

### [Industrial Applicability]

Since a paper current collector according to the present invention includes a conductive layer including a conductive material forming a conductive network with nanocellulose fiber on a fiber layer including the nanocellulose fiber, a weight is low, an energy density of an electrode is high when the electrode is manufactured, mechanical flexibility is superior, and all electrical properties and transparency of a material are also secured so that the paper current collector may be usefully used as an electrode current collector of an electrochemical device.

## Claims

1. A paper current collector comprising:
a fiber layer including nanocellulose fiber; and
a conductive layer formed in the fiber layer and including one or more conductive materials,
wherein the conductive material ranges from 5 to 1,000 parts by weight based on 100 parts by weight of the nanocellulose fiber.

2. The paper current collector of claim 1, wherein the paper current collector has a structure including:
the fiber layer which includes the nanocellulose fiber;
a first conductive layer which includes a first conductive material; and
a second conductive layer which includes a second conductive material.

3. The paper current collector of claim 1, wherein the nanocellulose fiber is reformed by one or more functional groups selected from the group consisting of a hydroxyl group, an acetyl group, a silane group, and an acryl group.

4. The paper current collector of claim 1, wherein the nanocellulose fiber has an average diameter ranging from 10 nm to 1,000 nm.

5. The paper current collector of claim 1, wherein the nanocellulose fiber is paper including vegetable cellulose fiber.

6. The paper current collector of claim 1, wherein the conductive material includes one or two selected from the group consisting of:
one or more carbon-based materials among carbon fiber, graphene, carbon nanotubes, carbon nanofiber, and carbon ribbons;
one or more metals among copper, silver, nickel, and aluminum; and
one or more conductive polymers among polyphenylene and polyphenylene derivatives.

7. The paper current collector of claim 1, wherein:
the conductive material has an average diameter ranging from 10 nm to 100 µm; and
an average ratio (L/D) of a length to an average diameter of the conductive material is 50 or more.

8. The paper current collector of claim 1, wherein the paper current collector has a light transmittance ranging from 50% to 99% for light with a wavelength of 550 nm.

9. A method of manufacturing a paper current collector, comprising electrospinning a spinning solution including one or more conductive materials on a fiber layer including nanocellulose fiber

10. The method of claim 9, wherein electrospinning is either sequential electro spinning or dual electro spinning.

11. The method of claim 9, wherein an electrospinning speed ranges from 0.1 ml/h to 100 ml/h.

12. The method of claim 9, wherein an amount of spinning solution used ranges from 0.01 ml to 10 ml per unit area (1 cm²).

13. An electrode comprising:
the paper current collector of claim 1; and
an electrode active material.

14. An electrochemical device comprising the electrode of claim 13.
